# EUROPEAN PATENT APPLICATION

(11) **EP 3 121 799 A1**
(43) Date of publication of application: **25.01.2017**
(21) Application number: 14886167.7
(22) Date of filing: 19.03.2014
(51) Int. Cl.: G08B 13/196, G08B 25/04

(54) **DIGITAL LOSS-DEFENSE SECURITY SYSTEM, METHOD, AND PROGRAM**

(71) Applicant: Technomirai Co., Ltd, Tokyo 169-0075 (JP)
(72) Inventor: MIWA, Kazuo, Tokyo 169-0075 (JP)
(74) Representative: Appelt, Christian W.
(86) International application number: PCT/JP2014/057476
(87) International publication number: WO 2015/140953

(57) **Abstract**

Provided is a digital loss-defense security system that, when there is a habitual shoplifter or a person showing suspicious behavior, allows an employee or the like nearby to respond quickly to the scene in real time and prevent an act of shoplifting. The digital loss-defense security system (1000) comprises a face authentication function unit (111) that makes a collation with a face image of a habitual shoplifter or person showing suspicious behavior accumulated in a face information DB (160), and a control unit (110) that, if a collation result by the face authentication function unit (111) is a match, determines the position of a mobile terminal device (30) closest to the habitual shoplifter or person showing suspicious behavior the collation result with whom is a match, based on positional information acquired from a position determination unit (113), and transmitting information regarding the habitual shoplifter or person showing suspicious behavior to the mobile terminal device (30).

## Description

### [Technical Field]

The present invention relates to a digital loss-defense security system, method, and a program for preventing shoplifting by a habitual shoplifter by monitoring a video shot by a monitoring camera.

### [Background Art]

The retail industry has invested a substantial sum of money in measures to counter shoplifting. Shoplifting not only leads to a direct loss of profits but also causes a shortage and a lack of commodities which results in considerable operating losses due to lost sales opportunities. As defensive measures, measures such as patrol monitoring of sales floors by security guards, surveillance by security cameras, and surveillance by face authentication cameras have been implemented.

Patent Literature 1 describes a shoplifting prevention system at a gate of which a monitoring camera is provided and which acquires face information from a received image, refers to face information saved in a storage device, and displays a screen showing the position of shooting in the store if a person corresponding to the face information has been shot.

Patent Literature 2 describes a shoplifting detection system applying face authentication that informs a store attendant by an alarm that a habitual shoplifter has come to the store through face recognition.

### [Citation List]

### [Patent Literature]

[Patent Literature 1] JP 2011-233133 A
[Patent Literature 2] JP 2008-257487 A

### [Summary of Invention]

### [Technical Problem]

However, in such conventional shoplifting prevention systems, the method for contacting an employee present near a habitual shoplifter is an alarm, interphone, or wireless mobile device, but it is unknown who is nearby and if the employee nearby is not aware thereof because of noise or the like of the sales floor or is unable to respond thereto because of stocking shelves or physiological reasons, a response is then made by a security guard quickly responding thereto, which is however not sufficient because the habitual shoplifter may have already committed the act and moved to another sales floor or may have even left the store in that case. Particularly, in a large-scale mall, home center, and the like, responding quickly thereto from a security guards room, office room, or the like has been difficult.

One way to prevent an act of shoplifting from being committed is that, when there is a habitual shoplifter or a suspicious person, the person in charge of a sales floor, employee, and/or security guard nearby responds quickly thereto in real time so as not to allow him/her to commit the act.

It is an object of the present invention to provide a digital loss-defense security system, method, and a program that, when there is a habitual shoplifter or a person showing suspicious behavior, allows an employee or the like nearby to respond quickly to the scene in real time and prevent an act of shoplifting.

### [Solution to Problem]

A digital loss-defense security system according to the present invention is for preventing shoplifting by a habitual shoplifter by monitoring a video shot by a monitoring camera installed so as to cover a predetermined surveillance target area in a store, and comprises positional information acquiring means for acquiring positional information of mobile terminal devices a plurality of employees respectively carry with them throughout the store; face image storing means for accumulating a face image of a habitual shoplifter or person showing suspicious behavior; face authentication collating means for collating a face image of a person shot by the monitoring camera with the face image of a habitual shoplifter or person showing suspicious behavior accumulated in the face image storing means; and control means for, if a collation result by the face authentication collating means is a match, determining a position of the mobile terminal device closest to the habitual shoplifter or person showing suspicious behavior the collation result with whom is a match, based on the positional information acquired from the positional information acquiring means, and transmitting information regarding the habitual shoplifter or person showing suspicious behavior to said mobile terminal device.

Also, if an answer-back of response-inability is returned from the mobile terminal device, the control means determines a position of the mobile terminal device the second closest to the habitual shoplifter or person showing suspicious behavior the collation result with whom is a match, and transmits the information regarding the habitual shoplifter or person showing suspicious behavior to said mobile terminal device, which allows an employee carrying a mobile terminal device located the second closest to the habitual shoplifter or person showing suspicious behavior with him/her to respond thereto promptly even if an employee carrying a mobile terminal device located closest to him/her is unable to respond thereto because of stocking shelves or physiological reasons. Employees may go to a warehouse or go to the bathroom, and thus do not always stay in fixed positions, and therefore, a case is considered in which reporting to an employee to whom a report is to be made is not feasible. Such a situation can be dealt with.

Also, if a predetermined time has elapsed after transmitting the information regarding the habitual shoplifter or person showing suspicious behavior to the mobile terminal device, the control means determines a position of the mobile terminal device the second closest to the habitual shoplifter or person showing suspicious behavior the collation result with whom is a match, and transmits the information regarding the habitual shoplifter or person showing suspicious behavior to said mobile terminal device, which allows an employee carrying a mobile terminal device located the second closest to the habitual shoplifter or person showing suspicious behavior with him/her to respond thereto promptly even if an employee carrying a mobile terminal device located closest is not aware thereof because of noise or the like of the sales floor.

Also, the information regarding the habitual shoplifter or person showing suspicious behavior includes information of a position of the habitual shoplifter or person showing suspicious behavior and a positon of a mobile terminal device to which the information has been transmitted overlapped on the surveillance target area, which allows an employee having received the information to promptly recognize the position of the habitual shoplifter or the like on the scene.

Also, the information regarding the habitual shoplifter or person showing suspicious behavior includes a face image of the habitual shoplifter or person showing suspicious behavior present in the surveillance target area, which allows an employee having received the information to promptly identify the habitual shoplifter or the like on the scene by looking at his/her face.

Also, the control means tracks movement of the habitual shoplifter or person showing suspicious behavior in the surveillance target area, and if the habitual shoplifter or person showing suspicious behavior distances himself/herself from the position of the closest mobile terminal device by a predetermined distance, transmits the information regarding the habitual shoplifter or person showing suspicious behavior to another mobile terminal device, which allows responding even to a case where the habitual shoplifter or the like moves around the store through cooperation of a plurality of employees.

Also, the positional information acquiring means acquires positional information of an employee in the surveillance target area through authentication of an authentication tag that an employee carries with him/her by a plurality of RFID readers installed in the surveillance target area or acquires positional information from a GPS function unit included in the mobile terminal device, which allows acquiring the positional information of the employee by a simple configuration.

Also, a digital loss-defense security method of the present invention is for preventing shoplifting by a habitual shoplifter by monitoring a video shot by a monitoring camera installed so as to cover a predetermined surveillance target area in a store, and comprises a positional information acquiring step of acquiring positional information of mobile terminal devices a plurality of employees respectively carry with them throughout the store; a face image storing step of accumulating a face image of a habitual shoplifter or person showing suspicious behavior; a face authentication collating step of collating a face image of a person shot by the monitoring camera with the face image of a habitual shoplifter or person showing suspicious behavior accumulated in the face image storing step; and a control step of, if a collation result by the face authentication collating step is a match, determining a position of the mobile terminal device closest to the habitual shoplifter or person showing suspicious behavior the collation result with whom is a match, based on the positional information acquired from the positional information acquiring means, and transmitting information regarding the habitual shoplifter or person showing suspicious behavior to said mobile terminal device.

Also, the present invention is a program for causing a computer to function as a digital loss-defense security system for preventing shoplifting by a habitual shoplifter by monitoring a video shot by a monitoring camera installed so as to cover a predetermined surveillance target area in a store, including positional information acquiring means for acquiring positional information of mobile terminal devices a plurality of employees respectively carry with them throughout the store, face image storing means for accumulating a face image of a habitual shoplifter or person showing suspicious behavior, face authentication collating means for collating a face image of a person shot by the monitoring camera with the face image of a habitual shoplifter or person showing suspicious behavior accumulated in the face image storing means, and control means for, if a collation result by the face authentication collating means is a match, determining a position of the mobile terminal device closest to the habitual shoplifter or person showing suspicious behavior the collation result with whom is a match, based on the positional information acquired from the positional information acquiring means, and transmitting information regarding the habitual shoplifter or person showing suspicious behavior to said mobile terminal device.

### [Advantageous Effects of Invention]

The present invention allows, when there is a habitual shoplifter or a person showing suspicious behavior, an employee or the like present closest to the habitual shoplifter or the like to respond quickly to the scene in real time and prevent an act of shoplifting.

### [Brief Description of Drawings]

[Fig. 1] Fig. 1 is a block diagram showing a configuration of a digital loss-defense security system according to an embodiment of the present invention.
[Fig. 2] Fig. 2 is a block diagram of a control unit of a monitoring device of the digital loss-defense security system according to the embodiment of the present invention.
[Fig. 3] Fig. 3 is a flowchart showing a registration processing of persons by the control unit of the monitoring device of the digital loss-defense security system according to the embodiment of the present invention.
[Fig. 4] Fig. 4 is a flowchart showing a registration processing of a sales floor layout by the control unit of the monitoring device of the digital loss-defense security system according to the embodiment of the present invention.
[Fig. 5] Fig. 5 is a flowchart showing a monitoring control processing of the monitoring device of the digital loss-defense security system according to the embodiment of the present invention.
[Fig. 6A] Fig. 6A is a view of information on a habitual shoplifter or a person showing suspicious behavior and a sales floor layout to be transmitted to an employee present at a closest position of the digital loss-defense security system according to the embodiment of the present invention.
[Fig. 6B] Fig. 6B is a view of detailed information on a habitual shoplifter or a person showing suspicious behavior to be transmitted to an employee present at a closest position of the digital loss-defense security system according to the embodiment of the present invention.
[Fig. 7] Fig. 7 is a flowchart showing a monitoring control processing of a mobile terminal device of the digital loss-defense security system according to the embodiment of the present invention.
[Fig. 8A] Fig. 8A is a view showing an example of a sales floor layout of the digital loss-defense security system according to the embodiment of the present invention.
[Fig. 8B] Fig. 8B is a view showing an example of a sales floor layout of the digital loss-defense security system according to the embodiment of the present invention.
[Fig. 9A] Fig. 9A is a view showing an example of a sales floor layout of the digital loss-defense security system according to the embodiment of the present invention.
[Fig. 9B] Fig. 9B is a view showing an example of a sales floor layout of the digital loss-defense security system according to the embodiment of the present invention.

### [Description of Embodiments]

Hereinafter, modes for carrying out the present invention will be described in detail with reference to the accompanying drawings.

### (Embodiment)

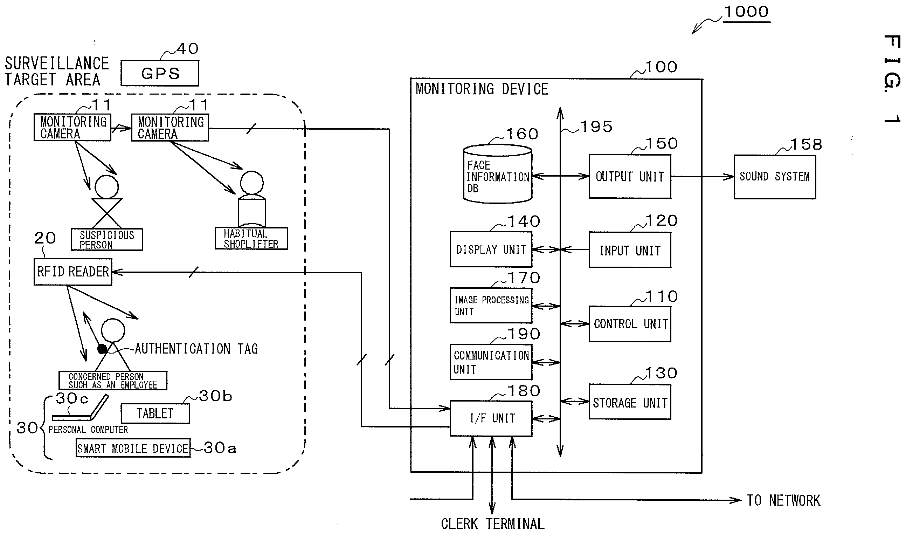

Fig. 1 is a block diagram showing a configuration of a digital loss-defense security system according to an embodiment of the present invention.

As shown in Fig. 1, the digital loss-defense security system 1000 comprises a plurality of monitoring cameras 11 installed on a ceiling or the like of a surveillance target area, an RFID (Radio Frequency IDentification) reader 20 installed in a store shelf or the like of the surveillance target area, an authentication tag 21 that a concerned person such as an employee (hereinafter, referred to as an "employee") carries with him/her and the RFID reader 20 authenticates, a mobile terminal device 30 that the employee carries with him/her, a GPS (Global Positioning System) 40 that captures the employee's position in the surveillance target area, and a monitoring device 100 that controls the system as a whole.

The digital loss-defense security system 1000 is a system that monitors a video from the monitoring camera 11 installed in the surveillance target area and notifies the mobile terminal device 30 the employee carries with him/her of information on a habitual shoplifter or a person showing suspicious behavior, for preventing shoplifting by the habitual shoplifter by the employee.

### <Monitoring camera 11>

A store or the like is installed with a plurality of monitoring cameras 11, and predetermined surveillance regions can be shot. Also, the monitoring cameras 11 may track a specific person or shooting location. Even if the monitoring cameras do not track a shooting location, a person and the like can be shot from various angles by installing a plurality of the monitoring cameras 11.

The monitoring cameras 11 are cameras for authentication that shoot persons' faces. The monitoring cameras 11 are installed at various positions in the surveillance target area such as in the store, and shoot persons' faces. Images shot by the monitoring cameras 11 are output to the monitoring device 100. The monitoring camera 11 may shoot a moving image at all times, or may shoot a single still image every certain period of time (for example, a few seconds).

### <RFID reader 20>

The RFID reader 20 manages the settlement or the like of a commodity with an RF tag by detecting whether there is an answer-back in response to a transmission to the RF tag attached to the commodity. In addition, the RF tag is removed from or disabled in an article having been brought into a state of being able to be rightfully taken out of the store by being purchased or the like.

In the present embodiment, the RFID reader 20 authenticates the authentication tag 21 that an employee possesses. The RFID reader 20 captures a position of the employee carrying the authentication tag 21 with him/her by the authentication of the authentication tag 21 that the employee possesses.

### <Mobile terminal device 30>

The mobile terminal devices 30 are respectively carried by a plurality of employees with them throughout the store. Examples of the mobile terminal devices 30 are smartphones 30a, tablets 30b, and notebook PCs 30c. Other examples of the mobile terminal devices 30 are mobile telephones, PHS (Personal Handy-Phone System) phones, PDAs (Personal Digital Assistants), and dedicated terminals. In the present embodiment, the mobile terminal device 30 can be used by each employee at a variety of locations (that is, current position), and can receive an e-mail message, a video including a moving image, or the like from the monitoring device 100 via a telephone line (not shown).

In the present embodiment, the mobile terminal devices 30 are used as the smartphones 30a or the tablets 30b, and each individual can use the same at a variety of locations (that is, current position). One of the mobile terminal devices 30 is disposed at headquarters/a head office (not shown).

The mobile terminal device 30 may have a configuration including the GPS 40 that captures the employee's position.

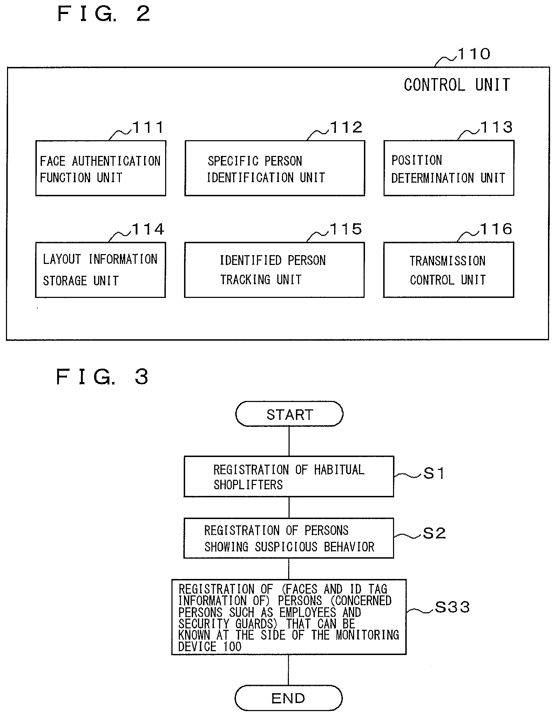

Also, the mobile terminal device 30 includes a response-inability setting unit 31 (response-inability setting means) that presets not being able to answer back to information transmitted from a control unit 110 (refer to Fig. 2) of the monitoring device 100 to be described later. The mobile terminal device 30, when response-inability has been set by the response-inability setting unit 31, returns an answer-back of said response-inability if transmission of information is received from the control unit 110 of the monitoring device 100.

### <GPS 40>

The GPS 40 receives radio waves of positional information from a GPS satellite or the like. The GPS 40 calculates, from information received via a GPS antenna, current positional information as three parameters of the latitude, longitude, and altitude to acquire positional information. Moreover, current positional information of the mobile terminal device 30 can also be acquired by performing transmission/reception of information with a mobile phone company server via a base station and network used in place of the GPS 40 or in combination therewith. The acquired positional information is transmitted on a timely basis to the monitoring device 100.

In addition, in the present embodiment, the example using a GPS satellite has been mentioned as a means for acquiring positional information, but it may be a system other than the GPS using a positional relationship with a base station. For example, when an Android (registered trademark) smartphone or a highly functional mobile phone with a camera is used as the mobile terminal device 30 being a mobile terminal, it is also possible to acquire current positional information of its own terminal through approach checking by performing transmission/reception of information with a mobile phone company server via a base station and mobile telephone communication network (not shown) used in place of GPS 40 or in combination therewith.

Also, positional information acquisition by Wi-Fi positioning, that is, positional information acquisition using a Wi-Fi access point and a predetermined positional information service may be used.

### [Monitoring device 100]

The monitoring device 100 is installed in, for example, a control room of the store, and provides centralized control for the surveillance target area in the store. The monitoring device 100 may be a common server computer, a personal computer, or the like.

The monitoring device 100 comprises a control unit 110 (control means), an input unit 120, a storage unit 130, a display unit 140, an output unit 150, a face information database (DB) 160 (face image storing means), an image processing unit 170, an interface (I/F) unit 180, and a communication unit 190, and the respective units are connected by a bus 195.

When it has been detected that a person being a habitual shoplifter or a person showing suspicious behavior (hereinafter, appropriately referred to as a specific person) has showed up at the store, the monitoring device 100 notifies information on this person and store information to the headquarters/head office and a security company system through a network.

In the following, when the subject is described as "the XX unit," the control unit 110 reads out respective programs from a ROM as needed and then loads the same in a RAM, and executes respective functions (described later). The respective programs may be stored in advance in the storage unit 130, or may be taken into the monitoring device 100 when necessary via another storage medium or communication medium.

The control unit 110 is formed by a CPU (Central Processing Unit) or the like, and controls the monitoring device 100 as a whole and executes a monitoring program to function as a digital loss-defense security system. A detailed configuration of the control unit 110 will be described later.

The input unit 120 is an input device for a user of the monitoring device 100 to input instructions and the like to the monitoring device 100, such as a keyboard, a mouse, a touch panel provided on a screen of the display unit 140, and a microphone.

The storage unit 130 stores still and/or moving images received from the monitoring cameras 11 and various data, programs, etc., to be used by the control unit 110.

The display unit 140 displays operating conditions of the monitoring device 100, images received from the monitoring cameras 11, and a GUI (Graphical User Interface) to operate the monitoring device 100, etc.

The output unit 150 is, for example, an audio interface, and outputs to a sound system 155 in the store a sound signal from the monitoring device 100. The sound signal to be output from the monitoring device 100 to the sound system 155 may be, for example, a sound signal input via a voice input device such as a microphone provided in the input unit 120 or a sound signal of music data stored in the storage unit 130 that is played by the control unit 110. The sound system 155 comprises an amplifier and a plurality of speakers disposed in the store, and makes an announcement in the store of a sound signal input from the monitoring device 100.

The face information DB 160 accumulates face images (face information) of habitual shoplifters, persons showing suspicious behavior, and store concerned persons, etc.

The image processing unit 170 performs a predetermined processing to a received image. Examples of the predetermined processing include contour extraction, image resizing, and resolution converting processing.

Also, the image processing unit 170 performs image processing such as applying a red or yellow frame to a face image to be transmitted to the employee's mobile terminal device 30.

The I/F unit 180 connects each monitoring camera 11 disposed in the surveillance target area and the monitoring device 100. Also, the I/F unit 180 connects with each RFID reader 20 disposed in the surveillance target area, and sends out an authentication result of the authentication tag 21 an employee who approached the RFID reader 20 possesses to the monitoring device 100. Also, the I/F unit 180 connects to the headquarters/head office, security company, and the like (not shown) by a network or dedicated line. As basic data such as persons' faces registered in the face information DB 160, data is acquired from the headquarters/head office, security company, and the like (not shown) via the I/F unit 180 to construct the face information DB 160. Also, exchanging information with the headquarters/head office, security company, and the like (not shown) can update each other's face information DBs to ones of the latest face images (face information). In addition, the security company is not an essential structural element of the digital loss-defense security system according to the present embodiment.

The communication unit 190 transmits/receives data with respect to the mobile terminal device 30 via a base station. In the present embodiment, the communication unit 190 receives positional information of each mobile terminal device 30 every certain period of time from the mobile terminal device 30 via the base station, and when a habitual shoplifter or person showing suspicious behavior is recognized, transmits information (such an e-mail message or a video including a moving image) regarding the habitual shoplifter or person showing suspicious behavior.

### [Control unit 110]

Fig. 2 is a block diagram of the control unit 110 of the monitoring device 100 of the digital loss-defense security system according to the embodiment of the present invention.

As shown in Fig. 2, the control unit 110 comprises a face authentication function unit 111 (face authentication collating means), a specific person identification unit 112 that identifies a habitual shoplifter or person showing suspicious behavior, a position determination unit 113 (positional information acquiring means) that determines the position of a habitual shoplifter, a person showing suspicious behavior and an employee, a layout information storage unit 114 that stores layout information of the surveillance target area, an identified person tracking unit 115 that tracks an identified person, and a transmission control unit 116 that, based on acquired positional information, transmits information regarding the habitual shoplifter or person showing suspicious behavior preferentially to a mobile terminal device 30 closest to the habitual shoplifter or person showing suspicious behavior.

If a collation result by the face authentication function unit 111 is a match, the control unit 110 determines the position of a mobile terminal device 30 closest to the habitual shoplifter or person showing suspicious behavior, the collation result with whom is a match, based on the positional information acquired from the position determination unit 113, and transmits information regarding the habitual shoplifter or person showing suspicious behavior to the mobile terminal device 30.

If a predetermined time has elapsed after transmitting the information regarding the habitual shoplifter or person showing suspicious behavior to the mobile terminal device 30 or an answer-back of response-inability is returned from the response-inability setting unit 31, the control unit 110 determines the position of a mobile terminal device 30 the second closest to the habitual shoplifter or person showing suspicious behavior the collation result with whom is a match, and transmits the information regarding the habitual shoplifter or person showing suspicious behavior to the mobile terminal device 30.

Here, the information regarding the habitual shoplifter or person showing suspicious behavior includes information of the position of the habitual shoplifter or person showing suspicious behavior and the position of employee overlapped on the surveillance target area. The information regarding the habitual shoplifter or person showing suspicious behavior includes a face image of the habitual shoplifter or person showing suspicious behavior present in the surveillance target area.

### <Face authentication function unit 111>

The face authentication function unit 111 performs face authentication to determine whether the face of a person included in an image received from the monitoring camera 11 is any of the persons' faces registered in the face information DB 160. The face authentication can be performed based on degree of similarity of face information extracted from a received image to the face information registered in the face information DB 160. Specifically, if the face information includes template image, degree of correlation between the template images can be obtained.

Also, the face authentication function unit 111 acquires, from face regions, information representing humans' facial characteristics (face information) to be used for face authentication, and registers the information in the face information database (DB) 160 associated with the individual images. Also, the face authentication function unit 111 receives persons' images transmitted from the headquarters (not shown) and registers the images in the face information DB 160.

In the present embodiment, the face authentication function unit 111 registers the following face information and related information.
- Registration of habitual shoplifters
- Cumulative recognition memory of habitual shoplifters
- Registration of persons showing suspicious behavior
- Registration of store concerned persons etc.

### <Specific person identification unit 112>

The specific person identification unit 112 collates a face image of a person shot by the monitoring camera 11 with the face images of habitual shoplifters or persons showing suspicious behavior accumulated in the face image DB 160, and identifies which person he/she is if already registered.

The specific person identification unit 112 identifies habitual shoplifters and persons showing suspicious behavior by the above-described face authentication processing. For the identification of a person showing suspicious behavior, the following method is employed, for example.
- Eye contact memory authentication
- Frequency of looking at camera recognized memory authentication
- In-time behavior frequency memory authentication

As described above, the person included in the received image can be determined to be a person showing suspicious behavior in such a case that his/her looking at the monitoring camera 11 is frequently recognized.

### <Position determination unit 113>

The position determination unit 113 acquires positional information of the plurality of mobile terminal devices 30 in the surveillance target area by GPS positional information or the RFID readers 20. Specifically, the position determination unit 113 acquires positional information of an employee in the surveillance target area through authentication of the authentication tag that the employee carries with him/her by the plurality of RFID readers 20 installed in the surveillance target area. In this case, the position determination unit 113 determines the position of a person identified to be a habitual shoplifter or person showing suspicious behavior by checking on the installation position of the monitoring cameras 11. That is, when an employee approaches each RFID reader 20, the position determination unit 113 determines that the employee is in proximity to the corresponding RFID reader 20 through authentication by each RFID reader 20 of the authentication tag 21 that the employee carries with him/her. Because the installation position of the RFID readers 20 has been registered in advance in the layout information storage unit 114, the employee's position can be determined.

Also, the position determination unit 113 acquires positional information from a GPS function unit included in the mobile terminal device 30.

### <Layout information storage unit 114>

The layout information storage unit 114 registers in advance monitoring layout information based on the positon of the monitoring cameras 11, the installation position of the RFID readers 20, the area name, etc.

### <Identified person tracking unit 115>

The identified person tracking unit 115 detects a person identified to be a habitual shoplifter or person showing suspicious behavior by tracking with the plurality of monitoring cameras 11, and checks a movement history in the surveillance target area. The identified person tracking unit 115 tracks movement of the habitual shoplifter or person showing suspicious behavior in the surveillance target area, and if the habitual shoplifter or person showing suspicious behavior distances himself/herself from the position of the closest mobile terminal device 30 by a predetermined distance, transmits information regarding the habitual shoplifter or person showing suspicious behavior to another mobile terminal device 30.

### <Transmission control unit 116>

If a collation result by the face authentication function unit 111 is a match, the transmission control unit 116 determines the position of a mobile terminal device 30 closest to the habitual shoplifter or person showing suspicious behavior the collation result with whom is a match based on the positional information acquired from the position determination unit 113, and transmits information regarding the habitual shoplifter or person showing suspicious behavior to the mobile terminal device 30.

Although the details will be described later, the transmission control unit 116 transmits to an employee closest to the position of a habitual shoplifter or person showing suspicious behavior a sound/a moving image/positional information of the person showing suspicious behavior (information of a layout having marking thereon) by e-mail. In the case of a multi-floored facility, the closeness is determined on a floor to floor basis. Also, the transmission is performed in a distinguishable manner with, for example, a red display of a habitual shoplifter and with, for example, a yellow display of a person showing suspicious behavior.

If there is no answer-back signal from the employee to whom the transmission was addressed even after an elapse of a predetermined time (for example, five seconds), the transmission control unit 116 chooses a second employee concerned person to perform a re-transmission to him/her. The second employee concerned person is (1) a concerned person such as an employee who is the second closest to the habitual shoplifter or person showing suspicious behavior, (2) a security guard, a store manager, an assistant store manager, or (3) the headquarters/head office.

Hereinafter, the operation of the digital loss-defense security system configured as described above will be described.

### [Registration processing]

First, a registration processing of various information of the digital loss-defense security system will be described.

Fig. 3 is a flowchart showing a registration processing of persons by the control unit 110 of the monitoring device 100 of the digital loss-defense security system. The present flow is executed by the control unit 110 (Fig. 2) of the monitoring device 100.

In step S1, the face authentication function unit 111 of the control unit 110 performs registration of habitual shoplifters.

When even viewed from past cases, it is considered that those who commit an act of shoplifting are also largely influenced by economic and human habitual factors. Therefore, persons involved in shoplifting cases at such corporate's stores in the past are registered in advance as habitual shoplifters in the face information DB 160. Specifically, the face authentication function unit 111 acquires, from face regions, information representing humans' facial characteristics (face information) to be used for face authentication, and registers the information in the face information database (DB) 160 associated with the individual images. Also, the face authentication function unit 111 receives persons' images transmitted from the headquarters (not shown) and registers the images in the face information DB 160.

In step S2, the face authentication function unit 111 of the control unit 110 performs registration of persons showing suspicious behavior. For the registration of persons showing suspicious behavior, for example, eye contact frequency and looking at the camera are used.

A person who shoplifts first checks whether there is a monitoring camera (s) in an out-of-sight place. A person who is about to shoplift moves his/her face, eyes, and gaze more than necessary in order to check whether there is a monitoring camera(s). Also, before committing shoplifting, the person checks where the target item(s) is located, the sales floor layout, conditions, and where and whether employees and security guards are present. For this reason, a person whose action such as unnecessarily moving as collated with shoppers, looking around himself/herself intending shoplifting, and freezing in place for a while is conspicuous is registered as a person showing suspicious behavior.

In step S3, the face authentication function unit 111 of the control unit 110 performs registration of (faces and ID tag information of) persons (concerned persons such as employees and security guards) that can be known at the side of the monitoring device 100.

Next, a registration processing of a surveillance area layout of the digital loss-defense security system will be described.

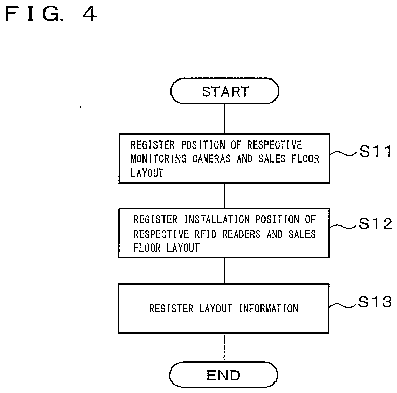

Fig. 4 is a flowchart showing a registration processing of a sales floor layout (surveillance target area) by the control unit 110 of the monitoring device 100 of the digital loss-defense security system. The present flow is executed by the control unit 110 (Fig. 2) of the monitoring device 100.

In step S11, the layout information storage unit 114 of the control unit 110 registers the disposition position of the respective monitoring cameras and the sales floor layout (surveillance target area).

In step S12, the layout information storage unit 114 of the control unit 110 registers the installation position of the respective RFID readers 20 and the sales floor layout (surveillance target area).

In step S13, the layout information storage unit 114 of the control unit 110 registers main layout information. Examples of the main layout information include sales floor entrances/exits, floor-number sales floors, and floor-number tenant names.

### [Monitoring control of monitoring device 100]

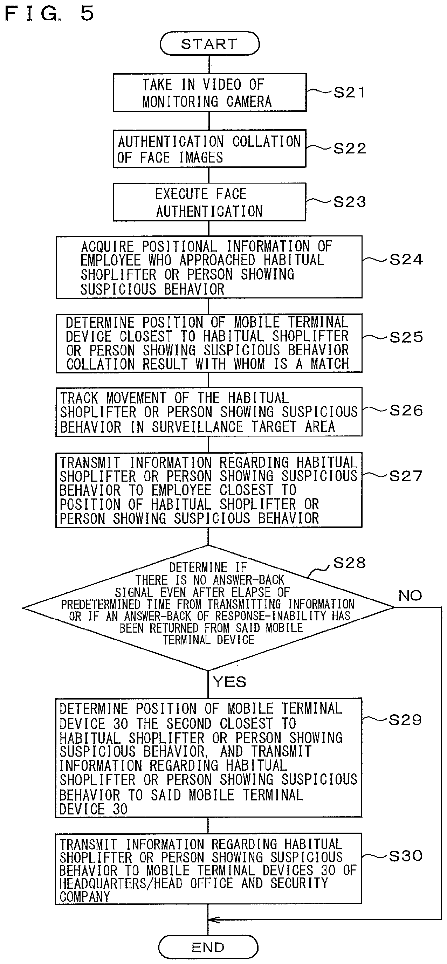

Fig. 5 is a flowchart showing a monitoring control processing of the monitoring device 100 of the digital loss-defense security system. The present flow is executed mainly by the control unit 110 (Fig. 2) of the monitoring device 100.

First, in step S21, the control unit 110 takes in a video of the monitoring camera 11.

In step S22, the face authentication function unit 111 of the control unit 110 performs face authentication to collate a face image of the person shot by the monitoring camera 11 with the face images of habitual shoplifters and persons showing suspicious behavior accumulated in the face information DB 160.

In step S23, the face authentication function unit 111 of the control unit 110 performs an authentication collation of a face image of a person shot by the monitoring camera 11 with the face images of habitual shoplifters and persons showing suspicious behavior accumulated in the face information DB 160.

If a collation result by the face authentication function unit 111 is a match, in step S24, the control unit 110 acquires positional information of an employee who approached the habitual shoplifter or person showing suspicious behavior (or an employee nearby) from the position determination unit 113.

In step S25, the control unit 110 determines the position of a mobile terminal device 30 closest to the habitual shoplifter or person showing suspicious behavior the collation result with whom is a match based on the acquired positional information.

In step S26, the identified person tracking unit 115 of the control unit 110 tracks movement of the habitual shoplifter or person showing suspicious behavior in the surveillance target area.

In step S27, the transmission control unit 116 of the control unit 110 transmits information regarding the habitual shoplifter or person showing suspicious behavior preferentially to an employee closest to the position of the habitual shoplifter or person showing suspicious behavior. For example, the transmission control unit 116 transmits a sound/a moving image/positional information of the person showing suspicious behavior (information of a sales floor layout having marking thereon) by e-mail.

In this case, if the habitual shoplifter or person showing suspicious behavior distances himself/herself from the position of the closest mobile terminal device 30 by a predetermined distance, the information regarding the habitual shoplifter or person showing suspicious behavior may be transmitted to another mobile terminal device 30.

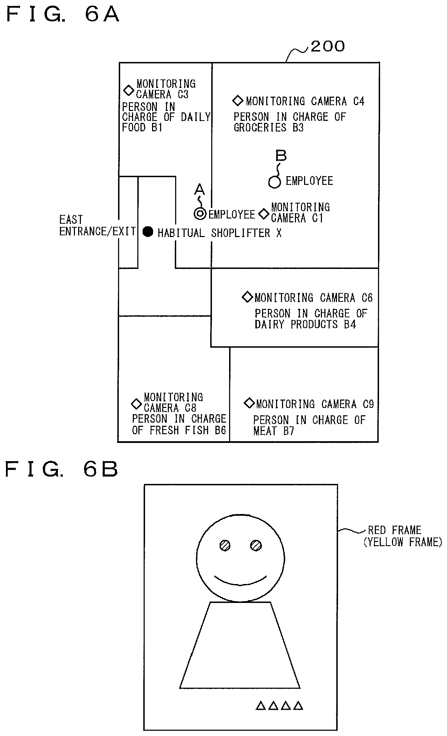

Fig. 6 is a view of information on a habitual shoplifter or a person showing suspicious behavior and a sales floor layout 200 (surveillance target area) to be transmitted to an employee present at the closest position. As shown in Fig. 6A, there is information for which the habitual shoplifter or person showing suspicious behavior (here, a habitual shoplifter X) "● (filled circle)," the employee A "⊚ (double circle)" present at a position closest to the habitual shoplifter X"● (filled circle), " and other employees B "○ (open circle)" including the second-closest employee are plotted to overlap on the sales floor layout 200 (surveillance target area). In this case, a habitual shoplifter and a person showing suspicious behavior may be shown in different colors by, for example, a red "● mark" and a yarrow "● mark," respectively, and doing this allows simply judging whether being a habitual shoplifter or a person showing suspicious behavior. Also, a sound and/or moving image regarding the habitual shoplifter or person showing suspicious behavior may be transmitted. Transmitting a sound and/or moving image together with an image allows knowing information that cannot be represented by only the image, enabling the employee to take more appropriate actions. In addition, the sound function may be in a mode of allowing selecting whether to release the sound depending on the situation.

Also, to the employee A "⊚ (double circle) " present at the closest positon, more detailed information may be transmitted in order to monitor the habitual shoplifter X "● (filled circle)." Examples of the more detailed information include detailed information on the sales floor layout 200 such as the floor-number name, sales floor name, and corner name, excerpt information from histories of the habitual shoplifter X "● (filled circle)," and guidelines for action to be taken by the employee. Also, as more detailed information, as shown in Fig. 6B, there can be information showing the habitual shoplifter X "● (filled circle)" with his/her "face" enlarged and detailed information "ΔΔΔ" on the habitual shoplifter X. In this case as well, a frame around the face of the habitual shoplifter and a frame around a person showing suspicious behavior may be shown in different colors of, for example, red and yellow, respectively. Transmitting the above-described detailed information has an effect of further promoting prevention of omission of monitoring and erroneous identification.

Returning to the flow in Fig. 5, in step S28, the transmission control unit 116 determines if there is no answer-back signal (acknowledgement: ACK) even after an elapse of a predetermined time (for example, five seconds) from transmitting the information regarding the habitual shoplifter or person showing suspicious behavior to a mobile terminal device 30 of an employee present at the closest position or if an answer-back of response-inability (negative-acknowledgement: NCK) has been returned from the mobile terminal device 30.

If there is no acknowledgement ACK even after an elapse of a predetermined time (for example, five seconds) from the mobile terminal device 30 or if a negative-acknowledgement NCK is returned from the mobile terminal device 30, the transmission control unit 116 determines the position of a mobile terminal device 30 the second closest to the habitual shoplifter or person showing suspicious behavior the collation result with whom is a match, and transmits the information regarding the habitual shoplifter or person showing suspicious behavior to said mobile terminal device 30 in step S29.

The answer-back to be executed by the above-described employee is, specifically, if having received the information regarding the habitual shoplifter or person showing suspicious behavior transmitted from the monitoring device 100, performing an operation of touching (or depressing) a predetermined button (for example, an "ANSWER-BACK" button) of the mobile terminal device 30 (smartphone 30a, tablet 30b, or notebook PC 30c) in a preset time (for example, five seconds). In response to this operation, the mobile terminal device 30 returns an answer-back (answer-back signal) to the monitoring device 100, judging that the information on the habitual shoplifter or person showing suspicious behavior has been received and said employee has performed a checking operation.

As above, if there is no acknowledgement ACK even after an elapse of a predetermined time (for example, five seconds) from the mobile terminal device 30 or if an answer-back of response-inability of a negative-acknowledgement NCK has been returned from said mobile terminal device 30, the transmission control unit 116 chooses a second employee concerned person to perform a re-transmission to him/her. The second employee concerned person is (1) a concerned person such as an employee who is the second closest to the suspicious person, (2) a security guard, a store manager, an assistant store manager, or (3) the headquarters/head office relations.

In step S30, the transmission control unit 116 transmits the information regarding the habitual shoplifter or person showing suspicious behavior to the mobile terminal device 30 of the headquarters/head office or security company to end the present flow.

### [Monitoring control of mobile terminal device 30]

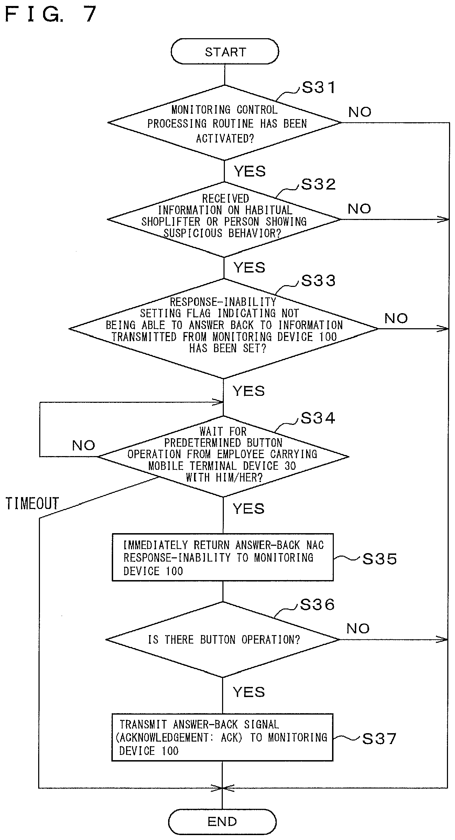

Fig. 7 is a flowchart showing a monitoring control processing of the mobile terminal device 30 of the digital loss-defense security system. The present flow is executed by the control unit (not shown) of the mobile terminal device 30.

First, the control unit of the mobile terminal device 30 determines in step S31 whether the present monitoring control processing routine has been activated, and directly ends the present flow if the present monitoring control processing routine has not been activated.

If the present monitoring control processing routine has been activated, the control unit of the mobile terminal device 30 determines in step S32 whether it has received information on a habitual shoplifter or person showing suspicious behavior transmitted from the monitoring device 100.

If having not received the information on a habitual shoplifter or person showing suspicious behavior described above, the control unit of the mobile terminal device 30 directly ends the present flow.

If the information on a habitual shoplifter or person showing suspicious behavior described above has been received, the response-inability setting unit 31 of the mobile terminal device 30 determines in step S33 whether a response-inability setting flag indicating not being able to answer back to information transmitted from the monitoring device 100 has been set. In addition, the setting of the response-inability setting flag may be, for example, completed by activating the present monitoring control processing routine and holding down a predetermined button and cancelled by again holding down the predetermined button after the completion of setting.

If the response-inability setting flag has been set, the response-inability setting unit 31 of the mobile terminal device 30 immediately returns an answer-back NAC of response-inability to the monitoring device 100 in step S34 to end the present flow.

If the response-inability setting flag has not been set, the control unit of the mobile terminal device 30 waits for a predetermined button (for example, a "ANSWER-BACK" button) operation from an employee carrying this mobile terminal device 30 with him/her in step S35.

If there is a button operation described above, the control unit of the mobile terminal device 30 transmits an answer-back signal (acknowledgement: ACK) to the monitoring device 100 in step S36 to end the present flow. In addition, if there is no button operation even after an elapse of a predetermined time, the control unit of the mobile terminal device 30 performs a timeout in step S37 to end the present flow.

### [Application example 1]

Description will now be given, in the case of sales floors of a commercial facility, of a sales floor configuration of the digital loss-defense security system 1000.

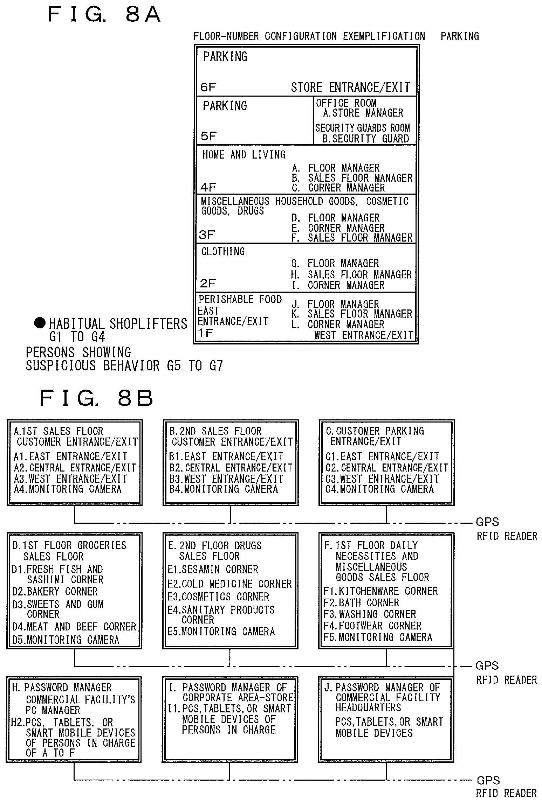

Fig. 8A and Fig. 8B are views showing an example of a sales floor layout of the digital loss-defense security system.

In the digital loss-defense security system 1000, the monitoring device 100 stores sales floor layout positional information, positional information of the RFID readers 20 on the sales floor layout 200, and employees' positional information by the RFID readers 20.

In sales floor corners, the monitoring cameras 11 and the RFID readers 20 are respectively installed. If GPS radio waves are unstable and the radio waves do not reach, positional information by the RFID reader 20 can be acquired.

The monitoring device 100, if having recognized a habitual shoplifter or person showing suspicious behavior by the monitoring camera 11, displays on a sales floor layout of the display unit 140 where the habitual shoplifter or person showing suspicious behavior is present in terms of floor number, entrance, sales floor name, and corner (refer to Fig. 6) name.

The monitoring device 100 recognizes positional information by the monitoring camera 11 on a habitual shoplifter or person showing suspicious behavior who has come to the store. The monitoring device 100 then recognizes positional information of sales floor administrators, security guards, and a store administrator by a GPS function or the RFID readers 20. The monitoring device 100 then determines which employee is close to the habitual shoplifter or person showing suspicious behavior, and transmits information (such as positional information, a shot image, and a face image) on the habitual shoplifter or person showing suspicious behavior together with an e-mail message, a moving image, and a sales floor layout in real time to an employee present at a position closest to the habitual shoplifter or person showing suspicious behavior. The employee present at a position close to the habitual shoplifter or person showing suspicious behavior can respond quickly thereto to appropriately respond thereto beforehand and can thus prevent from being victimized by shoplifting.

In the monitoring device 100, it is preferable to choose a transmitting/receiving GPS function or the RFID readers 20 according to a building, floor number, and sales floor for acquiring the positional information of sales floor employees.

The monitoring device 100 may transmit information (such as positional information, a shot image, and a face image) on the habitual shoplifter or person showing suspicious behavior together with an e-mail message, a moving image, and a sales floor layout in real time to an employee at the closest position, followed by performing a plurality of transmissions simultaneously to entrances/exits nearby, sales floor corners, and the identical floor number or the security guards and store administrator, as needed, besides said employee.

Also, the monitoring device 100 may transmit more detailed information to the closest employee described above. Examples of the more detailed information may include information for which positional information of the habitual shoplifter and employee is displayed to overlap a floor-number name, sales floor name, and corner name layout drawing, and information showing the habitual shoplifter with his/her "face" enlarged. This has an effect of preventing omission of monitoring and erroneous identification.

In a building where GPS radio waves can be received, employees' positional information is acquired using a GPS function. In a building, sales floor, and the like where GPS radio waves cannot be received, employees' positional information is acquired by the RFID readers 20.

The monitoring cameras 11 are preferably installed in a plurality of numbers at the entrances/exits of sales floors, places once shoplifted, where not in direct sight of employees, aisles, etc.

The monitoring device 100 has stored in advance positional information by the monitoring cameras 11, a corresponding floor number, sales floor, floor, entrance/exit, and a range in which the monitoring cameras 11 can authenticate recognized person(s) to be searched and habitual shoplifters. For example, the monitoring device 100 stores a floor-number name, a sales floor name, a corner name, and a sales floor layout. An employee can respond quickly to the place of a corresponding habitual shoplifter or person showing suspicious behavior.

For example, in Fig. 8A, if habitual shoplifters G1 to 4 (for example, with red ● marks or face frames) and persons showing suspicious behavior G5 to G7 (for example, with yellow ● marks or face frames) come to a sales floor, the monitoring device 100 determines where the habitual shoplifters G1 to 4 or persons showing suspicious behavior G5 to G7 are present in terms of "entrance/exist, " "floor number, " "sales floor," "corner," etc., on a sales floor layout, and transmits in real time information on the habitual shoplifters G1 to 4 or persons showing suspicious behavior G5 to G7 to an employee present at the closest position or an employee present at the second-closest position if there is no answer-back from the employee present at the closest position and a concerned person(s) other than the employees. In addition, the "transmits information to an employee" means transmitting said information by e-mail to a PC, tablet, or smart mobile device the employee carries with him/her. This allows the employee to respond quickly to a corresponding position before the act of shoplifting or suspicious behavior and to prevent such action.

Here, the information on the habitual shoplifters G1 to 4 or persons showing suspicious behavior G5 to G7 can be transmitted also to a commercial facility concerned person holding a password, corporate-area stores, or headquarters concerned. This allows the commercial facility concerned person to be informed when the habitual shoplifters G1 to 4 or persons showing suspicious behavior G5 to G7 come to the store and respond thereto. Also, the commercial facility concerned person can respond thereto in collaboration with a person directly in charge of the sales floor.

In addition, the digital loss-defense security system can respond also to large scale commercial facilities with three to four floors or more having an area on the order of 50 m × 200 m per floor, convenience stores, commercial facilities consisting of malls, respective stores with an annexed terminal, complex building hospitals, hotels, cultural facilities, etc.

### [Application example 2]

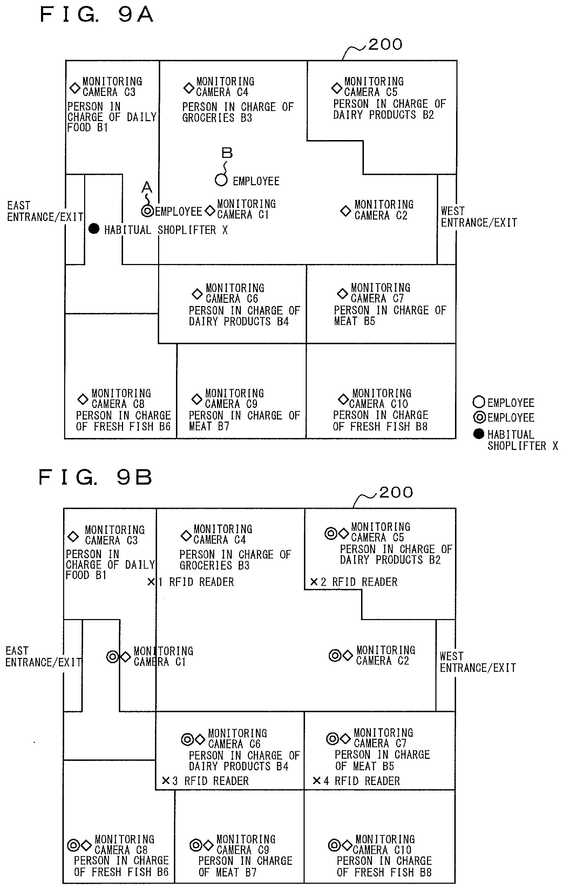

Fig. 9 includes views showing an example of a sales floor layout of the digital loss-defense security system. Fig. 9A is a first-floor sales floor planar layout by a GPS and an arrangement plan of monitoring cameras 11, and Fig. 9B is a first-floor sales floor planar layout by "× marks" of RFID readers and an arrangement plan of monitoring cameras. In addition, other respective floors also have almost the same sales floor layout.

### <Habitual shoplifter: individual>

As shown in Fig. 9A, a habitual shoplifter X "● (filled circle)" entered the store from the first-floor east entrance/exit.

The monitoring device 100 performs focus tracking of the habitual shoplifter X "● (filled circle)" by the monitoring cameras 11.

The monitoring device 100 transmits information (refer to Fig. 6A) on the habitual shoplifter X to the mobile terminal device 30 (smartphone 30a, tablet 30b, or notebook PC 30c) of a first-floor employee A "⊚ (double circle)" present at the closest positon carries with him/her. Here, the information on the habitual shoplifter X has been overlapped on the sales floor layout 200. As shown in Fig. 9, information for which the habitual shoplifter X "● (filled circle)," the employee A "⊚ (double circle)" present at a position closest thereto, and other employees B "○ (open circle)" including the second-closest employee are plotted to overlap on the sales floor layout 200 (surveillance target area) is transmitted. In this case, because of being a habitual shoplifter, the person is shown by a red "● mark. " Because the position of the habitual shoplifter X "● (filled circle) " and the position of sales floor managers (employees) B1 to B8 are shown on the corresponding sales floor layout 200, the positional relationship between the habitual shoplifter X "● (filled circle)" and the sales floor managers (employees) B1 to B8 is clarified. The mobile terminal device 30 of the sales floor manager (employee) A "⊚ (double circle)" may further have a warning tone or vibrator activated. The sales floor manager (employee) A "⊚ (double circle)" can monitor behavior of the habitual shoplifter X "● (filled circle)." In this example, the sales floor manager (employee) A "⊚ (double circle)" can shift to an initial reaction to the habitual shoplifter X "● (filled circle)," that is, a monitoring action from the very first when he/she came to the store, which is the most important, to restrain the habitual shoplifter X "● (filled circle)" from an initial motion, thereby preventing shoplifting.

Thereafter, if the habitual shoplifter X "● (filled circle)" shifts to an action of sizing up the situation while walking along respective floors and respective sales floors without committing an act of shoplifting, monitoring cameras C2 to C10 focusing on the habitual shoplifter X "● (filled circle) " follow the habitual shoplifter X "• (filled circle) " walking to focus thereon. Such a tracking function is executed by the identified person tracking unit 115 of the control unit 110 (refer to Fig. 2). The identified person tracking unit 115 detects a person identified to be a habitual shoplifter or person showing suspicious behavior by tracking with other monitoring cameras 11 (refer to Fig. 1), and checks a movement history in the surveillance target area.

The monitoring device 100 transmits information (refer to Fig. 6A) on the habitual shoplifter X to the mobile terminal device 30 (smartphone 30a, tablet 30b, or notebook PC 30c) of a first-floor sales floor manager (employee) A "⊚ (double circle)" present at the closest positon carries with him/her. In this case, first-floor employees are sales floor managers B1 to B8 of corresponding sales floors. Detailed information (refer to Fig. 6B) on the habitual shoplifter X is transmitted to, of the sales floor managers B1 to B8, a sales floor manager closest to the habitual shoplifter X "● (filled circle)."

If the habitual shoplifter X "● (filled circle)" moves to the second to fourth floors, the same monitoring function is executed in other sales floors as well.

### <Habitual shoplifter: plural in number>

On the other hand, when a plurality of (for example, seven) habitual shoplifters come to the store at the same time, the monitoring device 100 determines them to be habitual shoplifters by face recognition. Even when there are a plurality of habitual shoplifters, in the same manner as with an individual habitual shoplifter, on each of the floors and sales floors, information (refer to Fig. 6A) on the habitual shoplifters is respectively transmitted to the mobile terminal devices 30 employees present at the closest positons carries with them. Even if the plurality of habitual shoplifters intend an act(s) of shoplifting, because of real-time monitoring by the closest employee(s), they cannot perform an act(s) of shoplifting. Also, the corresponding employee accurately monitors the habitual shoplifters' actions near them, which is therefore unlikely to generate confusion. Also, such habitual shoplifters can be in cumulative recognition memory.

### <Person showing suspicious behavior>

As for such a person that is not a habitual shoplifter but moves along the respective floors and respective sales floors in the store many times (for example, four to five times) or looks at the monitoring cameras 11 (for example, four to five times), the monitoring device 100 registers in advance the person's face as a target of suspicious behavior (refer to registration processing of persons in Fig. 3). The monitoring device 100 can monitor this person showing suspicious behavior by the same method as with a habitual shoplifter. However, to the store or the like, actual damage (economic loss) caused by such a person showing suspicious behavior is considered to be smaller than that by a habitual shoplifter, and therefore, a mode of lowering the level of monitoring from that in the case of a habitual shoplifter can also be employed. This mode is, for example, executing the present system preferentially to a habitual shoplifter when a habitual shoplifter and a person showing suspicious behavior both came to the store, not performing notification to the headquarters/head office relations, and extending the waiting time for an answer-back signal described above (to, for example, 10 seconds). Also, the monitoring device 100 may have persons showing suspicious behavior in cumulative memory and may transmit a watch-out message if the face of the person showing suspicious behavior in cumulative memory is recognized.

### <Specific example of habitual shoplifter monitoring>

Suppose that the habitual shoplifter X "● (filled circle)" shown in Fig. 9A has entered a focus segment of the monitoring camera 11 of corner C5 of a person in charge of dairy products B2. The monitoring device 100 transmits information (refer to Fig. 6A) on the habitual shoplifter X to the mobile terminal device 30 (smartphone 30a, tablet 30b, or notebook PC 30c) of the person in charge of dairy products (employee) B2 (here, the employee A "⊚ (double circle)" present at the closest position) carries with him/her. If there is no answer-back operation (such as an e-mail pushing operation) in a predetermined time (for example, five seconds) from the person in charge of dairy products B2 (employee A "⊚ (double circle)") having received the information, a re-transmission of said information is performed to the employee B "○ (open circle) " who is the second closest from the habitual shoplifter X "● (filled circle)." In this case, the same transmission recovery may also be performed to the sales floor managers of each floor, security guards, or the store manager in combination with the re-transmission to the second-closest employee B "○ (open circle)."

Also, when the habitual shoplifter X "● (filled circle)" successively moves along the corners of respective sections, it is preferable to perform a corresponding transmission recovery to the sales floor managers of each floor, security guards, or the store manager. Doing this allows more effectively preventing shoplifting.

For example, when the habitual shoplifter X "● (filled circle)" moves to the respective floors, from the first floor to the second, third, and fourth floors, an employee of each sales floor cannot respond thereto by himself/herself. Therefore, in such a case that the habitual shoplifter X "● (filled circle)" takes action such as moving to the respective floors, the monitoring device 100 transmits information on the habitual shoplifter X (refer to Fig. 6A) to the mobile terminal device 30 (smartphone 30a, tablet 30b, or notebook PC 30c) of the security guard, the store manager, the assistant store manager, or the like, that controls the overall store, carries with him/her. Doing this allows track monitoring even in such a case that the habitual shoplifter takes action such as moving to the respective floors, thereby more effectively preventing shoplifting.

As described above in detail, according to the present embodiment, the digital loss-defense security system 1000 comprises the mobile terminal devices 30 that a plurality of employees respectively carry with them throughout a store, the position determination unit 113 that acquires positional information of the plurality of mobile terminal devices 30 in a surveillance target area, the face authentication function unit 111 that collates a face image of a person shot by the monitoring camera 11 with a face image of a habitual shoplifter or person showing suspicious behavior accumulated in the face information DB 160, and the control unit 110 that, if a collation result by the face authentication function unit 111 is a match, determines the position of a mobile terminal device 30 closest to the habitual shoplifter or person showing suspicious behavior the collation result with whom is a match, based on the positional information acquired from the position determination unit 113, and transmits information regarding the habitual shoplifter or person showing suspicious behavior to the mobile terminal device 30.

According to this configuration, when there is a habitual shoplifter or a person showing suspicious behavior, an employee or the like nearby can respond quickly to the scene in real time, and can prevent an act of shoplifting.

Particularly, in the present embodiment, the mobile terminal device 30 includes the response-inability setting unit 31 that presets not being able to answer back to information transmitted from the control unit 110, and when the response-inability setting unit 31 has set being in response-inability, returns an answer-back of said response-inability if transmission of information is received from the monitoring device 100. Accordingly, the monitoring device 100 can transmit the above-described information to a second-closest employee or person in charge without waiting for an answer-back from the mobile terminal device 30 for a predetermined time (for example, five seconds). Shoplifting is a split-second act, so the effect of being able to be supported by the second-closest employee or person in charge without waiting for a predetermined time (for example, five seconds) is great. That is, the digital loss-defense security system 1000 can respond to a time-sensitive situation through collaboration of the monitoring device 100 and the mobile terminal device 30.

In actual operation, employees may go to a warehouse or go to the bathroom, and thus do not always stay in fixed positions. For this reason, reporting to an employee to whom a report is to be made has not been feasible in some cases. In the present embodiment, because the mobile terminal devices 30 can perform a setting for making the same report-off (meaning that the employee is in response-inability for being in the bathroom or the like), there is no load on the side of the monitoring device 100.

The above description is an exemplification of preferred embodiments of the present invention, and the scope of the present invention is not limited thereto. For example, in the present embodiment, a description has been given of the case of using the telephone line 210 as a public line, but the present invention is not limited to this case, and for example, a radio communication line, the Internet, or a LAN may be used as a public line. Moreover, the communication terminal may be used according to the type of the public line, such as a transceiver used as a communication terminal when the public line is radio communication, and a personal computer or a palmtop computer used as a communication terminal when the public line is the Internet or a LAN. Thus constructing a digital loss-defense security system using an existing public line allows expanding the usage form of a digital loss-defense security system and allows suppressing the construction costs of a digital loss-defense security system.

Moreover, the title of a digital loss-defense security system and method has been used in the present embodiment, but this is for convenience of description, and the title may be digital smart security, a crime-prevention system, a security method, or the like.

Further, detection of an abnormal situation covers all of publicly-known matters. Examples of the abnormal situation are intrusion or approach of person(s) showing suspicious behavior. Also, the report may be any, without being limited to an e-mail message.

Also, a digital loss-defense security system and method of the present invention can also be realized by a program to operate a computer as the present digital loss-defense security system or method. This program may be stored in a storage medium that can be read by a computer.

This storage medium recorded with the program may be a ROM itself of the present digital loss-defense security system, or may be a storage medium such as a CD-ROM that can be read, when a program reading device such as a CD-ROM drive is provided as an external storage device, by inserting therein the storage medium.

Moreover, the above-described storage medium may be a magnetic tape, a cassette tape, a flexible disk, a hard disk, an MO/MD/DVD or the like, or a semiconductor memory.

All publications, patents and patent applications cited in the present specification are hereby incorporated by reference in their entirety.

### [Industrial Applicability]

The digital loss-defense security system, method, and program according to the present invention provide real-time responses in corporate and commercial facilities, offices, and the like to prevent loss of property and life and economic loss, whereby providing great utilization effects.

### [Reference Signs List]

11 monitoring camera
20 RFID reader
21 Authentication tag
30 Mobile terminal device
40 GPS
100 Monitoring device
110 Control unit (control means)
120 Input unit
130 Storage unit
140 Display unit
150 Output unit
160 Face information database (DB) (face image storing means)
170 Image processing unit
180 Interface (I/F) unit
190 Communication unit
111 Face authentication function unit (face authentication collating means)
112 Specific person identification unit
113 Position determination unit (positional information acquiring means)
114 Layout information storage unit
115 Identified person tracking unit
116 Transmission control unit
200 Sales floor layout (surveillance target area)
1000 Digital loss-defense security system

## Claims

1. A digital loss-defense security system for preventing shoplifting by a habitual shoplifter by monitoring a video shot by a monitoring camera installed so as to cover a predetermined surveillance target area in a store, comprising:
positional information acquiring means for acquiring positional information of mobile terminal devices a plurality of employees respectively carry with them throughout the store;
face image storing means for accumulating a face image of a habitual shoplifter or person showing suspicious behavior;
face authentication collating means for collating a face image of a person shot by the monitoring camera with the face image of a habitual shoplifter or person showing suspicious behavior accumulated in the face image storing means; and
control means for, if a collation result by the face authentication collating means is a match, determining a position of the mobile terminal device closest to the habitual shoplifter or person showing suspicious behavior the collation result with whom is a match, based on the positional information acquired from the positional information acquiring means, and transmitting information regarding the habitual shoplifter or person showing suspicious behavior to said mobile terminal device.

2. The digital loss-defense security system according to claim 1, wherein if an answer-back of response-inability is returned from the mobile terminal device, the control means determines a position of the mobile terminal device the second closest to the habitual shoplifter or person showing suspicious behavior the collation result with whom is a match, and transmits the information regarding the habitual shoplifter or person showing suspicious behavior to said mobile terminal device.

3. The digital loss-defense security system according to claim 1, wherein if a predetermined time has elapsed after transmitting the information regarding the habitual shoplifter or person showing suspicious behavior to the mobile terminal device, the control means determines a position of the mobile terminal device the second closest to the habitual shoplifter or person showing suspicious behavior the collation result with whom is a match, and transmits the information regarding the habitual shoplifter or person showing suspicious behavior to said mobile terminal device.

4. The digital loss-defense security system according to any one of claims 1 to 3, wherein the information regarding the habitual shoplifter or person showing suspicious behavior includes information of a position of the habitual shoplifter or person showing suspicious behavior and a positon of a mobile terminal device to which the information has been transmitted overlapped on the surveillance target area.

5. The digital loss-defense security system according to any one of claims 1 to 4, wherein the information regarding the habitual shoplifter or person showing suspicious behavior includes a face image of the habitual shoplifter or person showing suspicious behavior present in the surveillance target area.

6. The digital loss-defense security system according to claim 1, wherein the control means tracks movement of the habitual shoplifter or person showing suspicious behavior in the surveillance target area, and if the habitual shoplifter or person showing suspicious behavior distances himself/herself from the position of the closest mobile terminal device by a predetermined distance, transmits the information regarding the habitual shoplifter or person showing suspicious behavior to another mobile terminal device.

7. The digital loss-defense security system according to claim 1, wherein the positional information acquiring means acquires positional information of an employee in the surveillance target area through authentication of an authentication tag that an employee carries with him/her by a plurality of RFID readers installed in the surveillance target area or acquires positional information from a GPS function unit included in the mobile terminal device.

8. A digital loss-defense security method for preventing shoplifting by a habitual shoplifter by monitoring a video shot by a monitoring camera installed so as to cover a predetermined surveillance target area in a store, comprising:
a positional information acquiring step of acquiring positional information of mobile terminal devices a plurality of employees respectively carry with them throughout the store;
a face image storing step of accumulating a face image of a habitual shoplifter or person showing suspicious behavior;
a face authentication collating step of collating a face image of a person shot by the monitoring camera with the face image of a habitual shoplifter or person showing suspicious behavior accumulated in the face image storing step; and
a control step of, if a collation result by the face authentication collating step is a match, determining a position of the mobile terminal device closest to the habitual shoplifter or person showing suspicious behavior the collation result with whom is a match, based on the positional information acquired from the positional information acquiring means, and transmitting information regarding the habitual shoplifter or person showing suspicious behavior to said mobile terminal device.

9. A program for causing a computer to function as
a digital loss-defense security system for preventing shoplifting by a habitual shoplifter by monitoring a video shot by a monitoring camera installed so as to cover a predetermined surveillance target area in a store, comprising: positional information acquiring means for acquiring positional information of mobile terminal devices a plurality of employees respectively carry with them throughout the store; face image storing means for accumulating a face image of a habitual shoplifter or person showing suspicious behavior; face authentication collating means for collating a face image of a person shot by the monitoring camera with the face image of a habitual shoplifter or person showing suspicious behavior accumulated in the face image storing means; and control means for, if a collation result by the face authentication collating means is a match, determining a position of the mobile terminal device closest to the habitual shoplifter or person showing suspicious behavior the collation result with whom is a match, based on the positional information acquired from the positional information acquiring means, and transmitting information regarding the habitual shoplifter or person showing suspicious behavior to said mobile terminal device.
